# EUROPÄISCHE PATENTANMELDUNG

(11) **EP 2 161 158 A1**
(43) Veröffentlichungstag der Anmeldung: **10.03.2010**
(21) Anmeldenummer: 09466015.6
(22) Anmeldetag: 21.08.2009
(51) Int. Cl.: B60N 2/00, B60N 2/02, B60N 2/34

(54) **System zur Bedienung eines Kraftfahrzeugsitzes**

(30) Priorität: 05.09.2008 CZ 20080538
(71) Anmelder: Skoda Auto a.s., 293 60 Mlada Boleslav (CZ)
(72) Erfinder: Cimrman, Radek, 29401 Bakov nad Jizerou (CZ); Hozák, Josef, 29404 Dolni Bousov (CZ); Starý, Jaroslav, 29301 Mladá Boleslav (CZ)

(57) **Zusammenfassung**

Das System zur Bedienung des Kraftfahrzeugsitzes 1, insbesondere der vollständigen Umlage des Beifahrersitzes 1, umfasst ein Steuergerät 11, Steuerungsmotoren 12, einen Kopfstützensensor 18, einen Sitzbelegungssensor 17 und eine optische Signalisierung der Kopfstütze 19. Die Umlage des Sitzes 1 erfolgt mittels der Bedienelemente S1 13, S2 14 und S3 15, wobei die Funktionalität von den Signalen des Sitzbelegungssensors 17, des Kopfstützensensors 18 und der Kindersicherung abhängig ist.

## Beschreibung

### Technisches Gebiet

Die Erfindung betrifft das System zur Bedienung von Kraftfahrzeugsitzen, insbesondere des vollständigen Umlegens des Beifahrersitzes.

### Bisheriger Stand der Technik

Gegenwärtig werden die Kraftfahrzeuge oft mit einem System der elektrischen Einstellung von Kraftfahrzeugsitzen ausgestattet. Dieses beinhaltet eine Steuereinheit, Steuerungsmotoren der Sitze, eventuell Sensoren der Sitzbelegung. Die Anzahl der Steuerungsmotoren liegt in der Regel bei sechs Stück. Diese stellen das Verschieben nach vorn und hinten, nach oben und unten, die Schräglage der Sitzlehne, die Einstellung der Lendenstütze der Rückenlehne und die Verschiebung der Sitzlehne nach oben und unten sicher.

### Darstellung der Erfindung

Gegenstand der Erfindung ist das Steuerungssystem zur Sitzbedienung im Kraftfahrzeug, insbesondere das vollständige Umlegen des Beifahrersitzes in die im Wesentlichen waagerechte Position.

Diese Funktionalität kann vorteilhafterweise zur Erhöhung des Komforts der reisenden vor allem diejenigen verwendet werden, die auf dem Sitz hinter dem Beifahrersitz sitzen. Bei langen Reisen ist es möglich den Beifahrersitz in die im Wesentlichen waagerechte Position umzulegen. Der Reisende hinter diesem Sitz hat die Möglichkeit die Beine auszustrecken und auf diesen Sitz zu legen, dieses bereitet einen erhöhten Reisekomfort auf dem Fondsitz.

Das weist Bedienelemente in der Tür hinter dem Beifahrersitz und weiter am Cockpit in der Reichweite der Fahrerhand angebracht vor.

Das Bedienelement platziert in der Tür hinter dem Beifahrersitz steuert das Umklappen des Sitzes aus der Fahrposition in die im wesentlichen waagerechte Position, wobei in der Zwischenposition die Bewegung des Sitzes im Fall eines positiven Signals vom Sensor der Kopfstütze angehalten wird, dieses geschieht bei eingefahrener Kopfstütze, wobei die zwischenzeitliche Position optisch angezeigt wird.

Aus der Zwischenposition in die im Wesentlichen waagerechte Position ist die Sitzlehne mittels des Bedienelements, platziert in der Tür hinter dem Beifahrersitz, im Fall eines negativen Signals vom Kopfstützensensor, das bedeutet bei herausgenommener Kopfstütze, umlegbar.

Aus der Zwischenposition ist die Lehne mittels des Bedienelements platziert in der Tür hinter dem Beifahrersitz oder des Bedienelements platziert im Cockpit in der Reichweite der Fahrerhand in die Fahrposition nur im Fall eines positiven Signals vom Kopfstützensensor, dass heißt bei eingesteckter Kopfstütze, zu bewegen.

Das Bedienelement platziert in der Tür hinter dem Fahrersitz oder das Bedienelement platziert am Cockpit in Reichweite der Fahrerhand steuert das Umlegen des Sitzes aus der im Wesentlichen waagerechten Position in die Fahrposition, wobei in der Zwischenposition die Bewegung des Sitzes im Fall eines negativen Signals des Kopfstützensensors angehalten wird, dass heißt bei entnommener Kopfstütze, wobei die Zwischenposition optisch signalisiert wird.

Die Bedienung des Kraftfahrzeugsitzes ist im Fall eines positiven Signals des Sitzbelegungssensors und im Fall der aktivierten Kindersicherung blockiert.

### Übersicht der Figuren der Zeichnungen

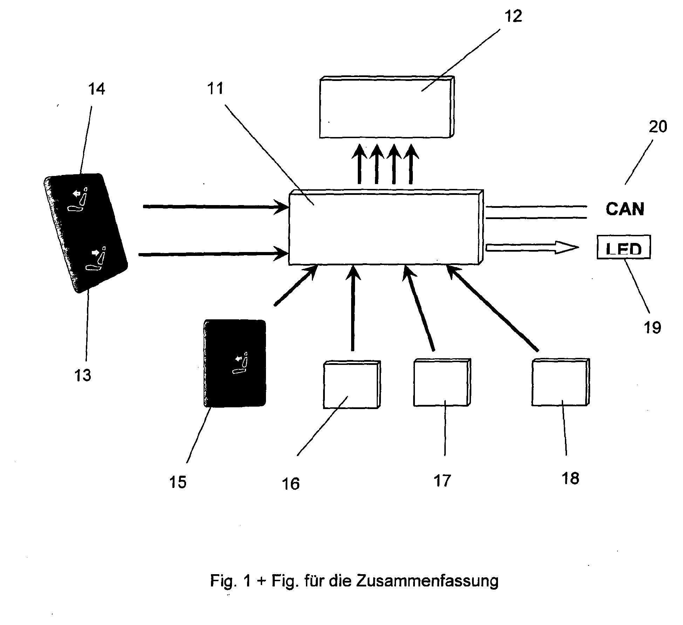

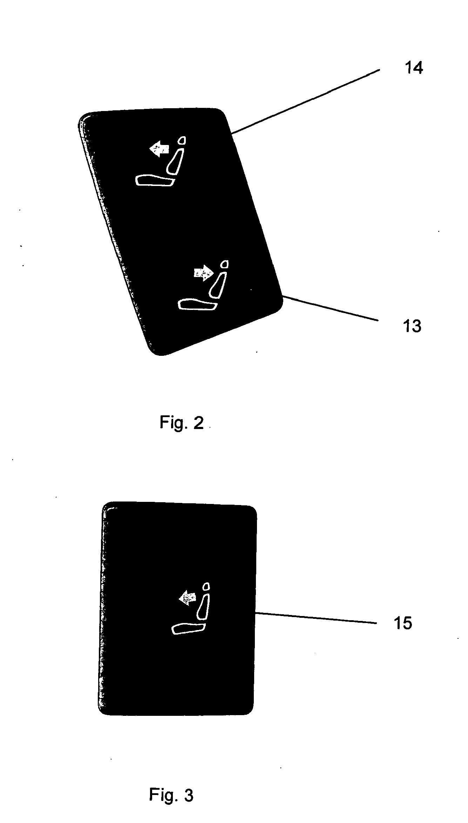

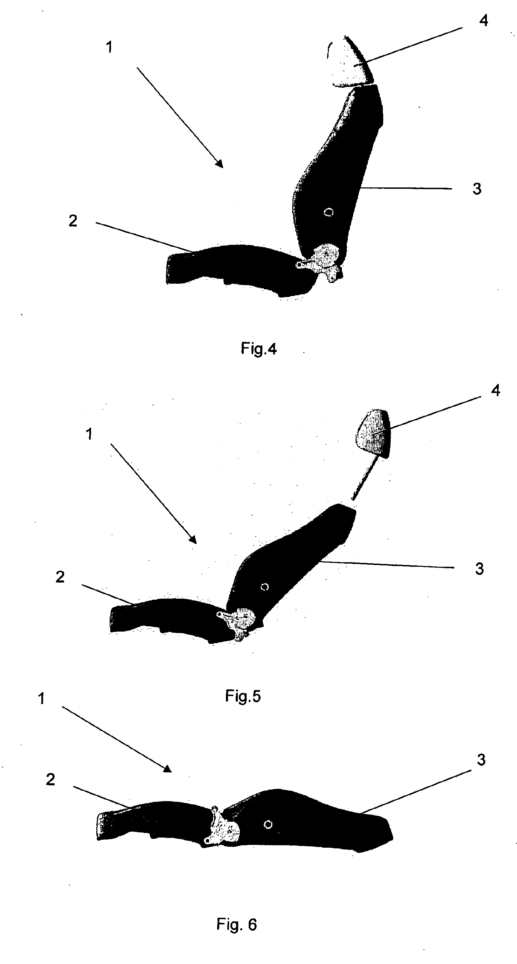

In der Fig. 1 befindet sich der Blockschaltplan der Kraftfahrzeugsitzsteuerung. In der Fig. 2 befinden sich die Darstellungen der Bedienelemente platziert in der Tür hinter dem Beifahrersitz und in der Fig. 3 das Bedienelement platziert im Cockpit in der Reichweite der Fahrerhand. In der Fig. 4 befindet sich die Darstellung der Grundposition des Sitzes A, in der Fig. 5 die Position B und in der Fig. 6 die umgelegte Position C mit entnommener Kopfstütze.

### Ausführungsbeispiel der Erfindung

In den beigefügten Figuren befindet sich die Vorstellung der technischen Lösung der Erfindung des Steuerungssystems des Kraftfahrzeugsitzes, insbesondere der vollständigen Umlegung des Beifahrersitzes.

In der Fig. 1 befindet sich der Blockschaltplan der Kraftfahrzeugsitzsteuerung. Das System setzt sich aus dem Steuergerät 11, den Steuerungsmotoren des Sitzes 12, dem Kopfstützensensor 18, dem Sitzbelegungssensor 17 der optischen Anzeigen des Kopfstützensensors 19 zusammen. Das System beinhaltet weiter die Bedienelemente S1 13 und S2 14 in der Tür hinter dem Beifahrersitz und weiter S3 15 am Cockpit in der Reichweite der Fahrerhand. Die Bedienelemente können zum Beispiel Schalter sein.

In der Fig. 4 bis 6 sind die drei Arbeitspositionen des Sitzes 1 dargestellt. In der Fig. 4 befindet sich die aufgezeigte Grundposition des Sitzes 1 A, was die Komfortposition für das Sitzen des Beifahrers während der Fahrt im Kraftfahrzeug darstellt. Jeder Beifahrer kann laut seinen Wünschen und seiner körperlichen Maße die Einstellung individuell gestalten. In der Fig. 5 ist die Position B dargestellt, was die Position zwischen den Positionen A und C ist, bei welcher noch die Kopfstütze 4 aus der Sitzlehne 3 herausnehmbar ist. In der Fig. 6 befindet sich die Position C, also im Wesentlichen waagerecht, mit entfernter Kopfstütze 4.

Die Anzahl der Steuerungsmotoren 12 des Sitzes 1 liegt in der Regel bei sechs Stück. Diese stellen das Verschieben des Sitzes 1 nach vorn und hinten, nach oben und unten, die Schräglage der Sitzlehne 3, die Einstellung der Lendenstütze der Rückenlehne des Sitzes 3 und die Verschiebung der Lehne des Sitzes 3 nach oben und unten sicher. Mittels dieser Motoren 12 kann der Sitz 1 umgelegt und gehoben werden, aus der Position A in die Position C über die Position B und zurück.

Das Bedienelement S1 13 platziert in der Tür hinter dem Beifahrersitz 1 dient der Steuerungsbedienung des Umlegens des Sitzes 1 in die Position C. In die Position C besteht die Möglichkeit den Sitz 1 grundlegend aus jeder Position des Sitzes 1 umzulegen. Nach der Aktivierung des Bedienelements S1 13, dass heißt nach der Betätigung des Schalters 13, ist der Sitz 1 in die Position B umgelegt. Vorzugsweise erfolgt dieses automatisch und dieses im Fall der eingeschalteten Motorzündung oder bei gestartetem Motor. Im Fall der abgeschalteten Zündung oder des abgezogenen Schlüssels ist es notwendig den Schalter 13 den gesamten Zeitraum des Umlegens des Sitzes 1 zu halten. In der Position B bleibt die Bewegung des Umlegens des Sitzes 1 stehen obwohl der Schalter 13 betätigt wird. Die Anwesenheit der Kopfstütze 4 wird optisch angezeigt, vorteilhafterweise in der Ausführung einer oder mehrerer, blinkender LED 19 platziert an der oberen Fläche der Lehne 3 unter der Kopfstütze 4.

Solange die Kopfstütze 4 nicht herausgenommen wurde, werden die LED 19 nicht aufhören zu blinken und es ist nicht möglich im Umklappen des Sitzes 1 in die Position C fortzufahren. Nach der Entnahme der Kopfstütze 4 hören die LED 19 auf zu blinken. Durch wiederholtes Betätigen und Halten des Schalters S1 13 kann der Sitz 1 in die Position C umgelegt werden, wo dieser selbstständig stehen bleibt, oder den Schalter S2 14 betätigen. In diesem Fall kehrt der Sitz 1 nicht in die Position A zurück, sondern die LED 19 beginnen zu blinken. Zum heben des Sitzes 1 in die Position A muss die Kopfstütze 4 eingesteckt werden. Die LED 19 gehen aus und dann lässt sich das Heben des Sitzes 1 in die Position A mittels des Schalters S2 14 zu Ende führen.

Das Heben des Sitzes 1 in die Position A kann mittels des Schalters S2 14 platziert in der Tür hinder dem Beifahrersitz erfolgen, gegebenenfalls mittels des Schalters S3 15 platziert am Cockpit in der Reichweite der Fahrerhand. Vorzugsweise erfolgt dieses automatisch und dieses im Fall der eingeschalteten Motorzündung oder bei gestartetem Motor. Im Fall der abgeschalteten Zündung oder des abgezogenen Schlüssels ist es notwendig den Schalter S2 14 oder S3 15 den gesamten Zeitraum des rückwärtigen Umlegens des Sitzes 1 zu halten. Bei Erreichung der Position B, die gleich der Position beim Umlegen ist, beginnen die LED 19 zu blinken. Solange die Kopfstütze 4 nicht eingeschoben wird, werden die LED 19 nicht aufhören zu blinken und es ist nicht möglich im rückwärtigen Umklappen des Sitzes 1 in die Position A fortzufahren. Nach dem Einschieben der Kopfstütze 4 hören die LED 19 auf zu blinken und nach wiederholter Betätigung des Schalters S2 14 oder S3 15 kann der Sitz 1 in die Ausgangsposition A gestellt werden, wo dieser selbstständig stehen bleibt oder den Schalter S1 13 betätigen, aber der Sitz 1 wird keine Bewegung vollführen und die LED 19 beginnen an zu blinken. Die Kopfstütze 4 muss herausgezogen werden, dann hören die LED 19 auf zu leuchten und es ist möglich mittels des Schalters S1 13 das Umlegen des Sitzes 1 in die Position C zu beenden.

In der vorzugsweisen Ausführung beinhaltet das System das Bedienelement S4 16 platziert reich wie das Bedienelement S3 15 am Cockpit in der Reichweite der Fahrerhand, und dieses hat die selbe Funktion wie das Bedienelement S1 13.

Die Bedienung des Kraftfahrzeugsitzes 1 ist im Fall eines positiven Signals des Sitzbelegungssensors 17 und im Fall der aktivierten Kindersicherung blockiert.

Das Steuergerät des Sitzes 11 ist mit dem Motorsteuergerät mittels des Daten-CAN-Bus 20 verbunden.

### Gewerbliche Anwendbarkeit

Das System der Kraftfahrzeugsitzsteuerung laut der Erfindung kann bei allen Kraftfahrzeugen eingesetzt werden, insbesondere bei denen, die einen Beifahrersitz und eine zweite Sitzreihe vorweisen.

### Liste der Bezugskennzeichnungen

- 1: Sitz
- 2: Sitzbank
- 3: Sitzlehne
- 4: Kopfstütze
- 11: Sitzsteuergerät
- 12: Sitzmotoren
- 13: Bedienelement S1
- 14: Bedienelement S2
- 15: Bedienelement S3
- 16: Bedienelement S4
- 17: Sitzbelegungssensor
- 18: Kopfstützenanwesenheitssensor
- 19: Optische Anzeige der Kopfstützenanwesenheit
- 20: Daten-CAN-Bus

## Patentansprüche

1. Das System der Steuerung des Kraftfahrzeugsitzes (1), insbesondere der vollständigen Umlage des Beifahrersitzes (1) in die im Wesentlichen waagerechte Position, wobei der Sitz (1) ein Steuergerät (11), Steuerungsmotoren (12), einen Kopfstützensensor (18), einen Sitzbelegungssensor (17) und die optische Anzeige des Kopfstützensensors (19) vorweist, **dadurch gekennzeichnet, dass** das Bedienelement S1 (13) platziert in der Tür hinter dem Beifahrersitz (1) das Umlegen des Sitzes (1) aus der Fahrposition A in die im Wesentlichen waagerechte Position C steuert, wobei in der Position B die Bewegung des Sitzes (1) im Fall eines positiven Signals des Kopfstützensensors (18) angehalten wird, dieses bei eingefahrener Kopfstütze (4), wobei die Position B optisch signalisiert (19) wird.

2. Das System der Steuerung des Kraftfahrzeugsitzes (1) laut dem Anspruch 1, **da durch gekennzeichnet**, **dass** aus der Position B in die Position C der Sitz (1) mittels des Bedienelements S1 (13) platziert in der Tür hinter dem Beifahrersitz (1) im Fall eines negativen Signals des Sensors (18) der Kopfstütze (4), dieses bei herausgenommener Kopfstütze (4) umlegbar ist.

3. Das System der Steuerung des Kraftfahrzeugsitzes (1) laut der vorangegangenen Ansprüche, **dadurch gekennzeichnet, dass** aus der Position B der Sitz (1) mittels des Bedienelements S2 (14) platziert in der Tür hinter dem Beifahrersitz (1) oder des Bedienelements S3 (15) im Cockpit in Reichweite der Fahrerhand in die Position A nur im Fall eines positiven Signals des Sensors (18) der Kopfstütze (4), dieses bei eingesetzter Kopfstütze (4) rückwärtig aufstellbar ist.

4. Das System der Steuerung des Kraftfahrzeugsitzes (1) laut der vorangegangenen Ansprüche, **dadurch gekennzeichnet, dass** das Bedienelement S2 (14) platziert in der Tür hinter dem Beifahrersitz (1) oder des Bedienelement S3 (15) platziert am Cockpit in der Reichweite der Fahrerhand das Umlegen des Sitzes (1) aus der Position C in die Position A steuert, wobei in der Position B die Bewegung des Sitzes (1) im Fall eines negativen Signals vom Kopfstützensensor (4) angehalten wird, wobei die Position B optisch signalisiert wird (19).

5. Das System der Steuerung des Kraftfahrzeugsitzes (1) laut der vorangegangenen Ansprüche, **dadurch gekennzeichnet, dass** die Steuerung des Sitzes (1) des Kraftfahrzeugs im Fall eines positiven Signals vom Belegungssensor (17) des Sitzes (1) blockiert.

6. Das System der Steuerung des Kraftfahrzeugsitzes (1) laut der vorangegangenen Ansprüche, **dadurch gekennzeichnet, dass** die Steuerung des Sitzes (1) des Kraftfahrzeugs im Fall der aktivierten Kindersicherung blockiert.
